# EUROPEAN PATENT APPLICATION

(11) **EP 3 812 170 A1**
(43) Date of publication of application: **28.04.2021**
(21) Application number: 19826165.3
(22) Date of filing: 12.06.2019
(51) Int. Cl.: B60C 9/18, B29D 30/38, B29D 30/70, D07B 1/06

(54) **TIRE AND TIRE MANUFACTURING METHOD**

(30) Priority: 25.06.2018 JP 2018120307
(71) Applicant: Bridgestone Corporation, Chuo-Ku Tokyo 104-8340 (JP)
(72) Inventor: KAMIJO, Tetsushi, Tokyo 104-8340 (JP); HASEGAWA, Keiichi, Tokyo 104-8340 (JP); TANAKA, Hidehisa, Tokyo 104-8340 (JP)
(74) Representative: Oxley, Robin John George
(86) International application number: PCT/JP2019/023355
(87) International publication number: WO 2020/004045

(57) **Abstract**

A belt layer is provided at a tire radial direction (arrow R direction) outer side of a carcass. This belt layer is structured to include a reinforcing portion and a resin portion. The reinforcing portion of the belt is formed by reinforcing cords crossing, and surfaces of the resin cords are covered by the resin portion.

## Description

### Technical Field

The present disclosure relates to a tire and a method of manufacturing a tire.

### Background Art

Tires have been disclosed that have belts in which resin covered cords, that are formed by reinforcing cords being covered by resin, are wound in spiral forms on and are joined to the outer peripheral surface of a tire frame member that is structured by using a resin material (see, for example, Japanese Patent Application Laid-Open (JP-A) No. 2014-210487).

### SUMMARY OF INVENTION

### Technical Problem

In the aforementioned prior art, at the time of joining the resin-covered cords to the outer peripheral surface (the wound-on surface) of the tire frame member, hot air is blown-out onto the joining surfaces of the resin-covered cords and onto the outer peripheral surface of the tire frame member, and the portions onto which the hot air has been blown-out are melted and welded together. Then, the resin-covered cords are pushed-against the outer peripheral surface of the tire frame member by a pushing roller, and the resin-covered cords are jointed to the outer peripheral surface of the tire frame member.

Further, in addition to this, there are also methods in which a belt is formed by attaching resin-covered cords to a wound-on surface that is metal or the like and that is difficult to join together with resin, and welding together the resins of the resin-covered cords that are adjacent to one another, and this belt is removed from the wound-on surface and is joined to a tire frame member.

On the other hand, in a case in which, for example, the welded surface area of the resins cannot be ensured sufficiently at the resin covered cords that are adjacent to one another, there is the possibility that the welding strength between the resins will weaken, and there is the need to consider the ensuring of durability at the time of applying this belt to a tire.

In view of the above-described circumstances, an object of the present disclosure is to provide a tire having more improved durability, and a method of manufacturing the tire. Solution to Problem

A tire relating to the present disclosure comprises: a tire frame member that is annular; and a belt that is provided at a tire radial direction outer side of the tire frame member, wherein the belt is structured to include a reinforcing portion that is formed by reinforcing cords crossing, and a resin portion that covers the reinforcing portion.

In the tire relating to the present disclosure, the belt is provided at the tire radial direction outer side of the tire frame member that is annular. This belt is structured to include the reinforcing portion and the resin portion. The reinforcing portion is formed by reinforcing cords crossing, and the reinforcing portion is covered by the resin portion.

Due thereto, the reinforcing cords that cross and the resin portion are made integral, and, between the reinforcing cords that cross one another, welded surfaces between resin portions can themselves be eliminated. Due thereto, the rigidity of the belt itself that is structured to include the reinforcing portion and the resin portion can be improved, and the durability of a tire that has this belt can be improved. Note that "covered" here includes at least a portion of the reinforcing portion being covered by resin.

### Advantageous Effects of Invention

As described above, the tire and method of manufacturing a tire relating to the present disclosure have the excellent effect of being able to improve durability more.

### BRIEF DESCRIPTION OF DRAWINGS

Fig. 1 is a cross-sectional view along a tire rotation axis and showing a tire relating to a present embodiment.
Fig. 2 is an enlarged sectional view of main portions showing the structure of a belt portion at the tire relating to the present embodiment.
Fig. 3A is a perspective view showing a method of manufacturing a belt at the tire relating to the present embodiment.
Fig. 3B is a perspective view showing the method of manufacturing the belt at the tire relating to the present embodiment.
Fig. 3C is a perspective view showing the method of manufacturing the belt at the tire relating to the present embodiment.
Fig. 3D is a perspective view showing the method of manufacturing the belt at the tire relating to the present embodiment.
Fig. 4A is an enlarged sectional view of main portions showing the method of manufacturing the belt at the tire relating to the present embodiment.
Fig. 4B is an enlarged sectional view of main portions showing the method of manufacturing the belt at the tire relating to the present embodiment.
Fig. 4C is an enlarged sectional view of main portions showing the method of manufacturing the belt at the tire relating to the present embodiment.
Fig. 5 is an enlarged sectional view of main portions that corresponds to Fig. 2 and illustrates a modified example of the belt at the tire relating to the present embodiment.
Fig. 6A is a perspective view of a method of manufacturing, which shows the modified example of the belt at the tire relating to the present embodiment.
Fig. 6B is a perspective view of the method of manufacturing, which shows the modified example of the belt at the tire relating to the present embodiment.
Fig. 6C is a perspective view of the method of manufacturing, which shows the modified example of the belt at the tire relating to the present embodiment.
Fig. 7 is an enlarged sectional view of main portions that corresponds to Fig. 2 and shows a comparative example.

### DESCRIPTION OF EMBODIMENTS

Forms for implementing the present invention are described hereinafter on the basis of the drawings. In the drawings, the arrow R direction indicates the tire radial direction, and the arrow W direction indicates the tire width direction. The tire radial direction means the direction orthogonal to the tire rotation axis (not shown). Further, the tire width direction means the direction parallel to the tire rotation axis, and the tire width direction can also be called the tire axial direction. Moreover, in the drawings, CL is the tire equatorial plane

The methods of measuring the dimensions of the respective portions are in accordance with the methods put forth in the 2018 YEAR BOOK issued by JATMA (Japan Automobile Tyre Manufacturer Association, Inc.). In cases in which TRA standards and ETRTO standards are applied at the regions of use or the regions of manufacturing, those respective standards are followed.

### <Structure of Tire>

### (Tire)

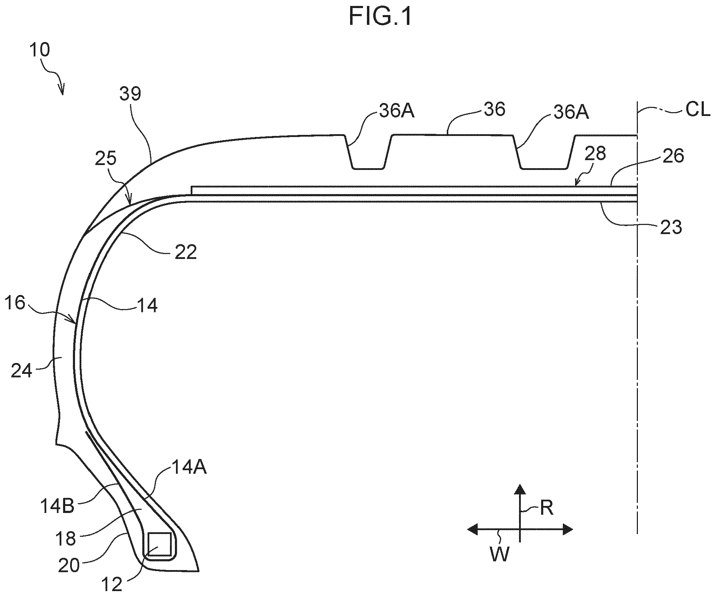

First, the structure of a tire 10 relating to an embodiment of the present invention is described by using Fig. 1.

As shown in Fig. 1, the tire 10 relating to the present embodiment is a so-called radial tire that is used at a passenger vehicle for example, and has a pair of bead portions 20 in which bead cores 12 are embedded. A carcass (tire frame member) 16 that is formed from a single carcass ply 14 that is described later spans between one of the bead portions 20 and another of the bead portions (not shown). Note that Fig. 1 illustrates the shape of the tire 10 in a natural state before air is filled therein.

The carcass ply 14 is formed by plural cords (not illustrated), which extend in the radial direction of the tire 10, being covered by a coating rubber (not shown). Namely, the tire 10 of the present embodiment is a so-called radial tire. The material of the cords of the carcass ply 14 is PET for example, but may be another conventionally-known material.

The end portions in the tire width direction (the arrow W direction) of the carcass ply 14 are folded-over around the bead cores 12 toward the tire radial direction (the arrow R direction) outer side. Further, at the carcass ply 14, the portion, which spans from the one of the bead portions 20 to the another of the bead portions (not illustrated) is called a main body portion 14A, and the portions that are folded-over from the bead cores 12 are called folded-over portions 14B.

Further, bead fillers 18, whose thicknesses gradually decrease from the bead cores 12 toward the tire radial direction outer side, are disposed between the main body portion 14A and the folded-over portions 14B of the carcass ply 14. The rigidity of the bead portions 20 is improved by these bead fillers 18 being formed.

Here, an inner liner 22 that is formed from rubber is disposed at the tire inner side of the carcass 16. Side rubber layers 24 that are formed from a rubber material are provided at the tire transverse direction both outer sides of the carcass 16, respectively. A crown portion 23 is provided between the side rubber layer 24 and the side rubber layer 24. This crown portion 23 is gently curved so as to be convex toward the tire axial direction outer side from the bead portions 20 toward the crown portion 23, and the crown portion 23 is a supporting portion of a tread 36 that is disposed at the tire radial direction outer side thereof.

Note that, in the present embodiment, a tire case 25 is structured by the bead cores 12, the carcass 16, the bead fillers 18, the inner liner 22, and the side rubber layers 24. Namely, the tire case 25 is a tire frame member that forms the frame of the tire 10.

### (Belt)

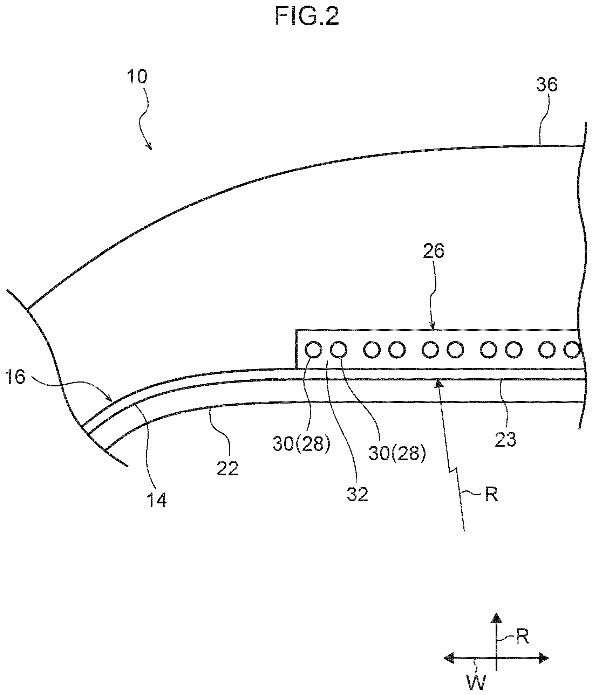

A belt 26 relating to an embodiment of the present invention is described next by using Fig. 2.

As shown in Fig. 2, the belt 26 is provided at the outer side of the crown portion 23 of the carcass 16, i.e., at the tire radial direction (the arrow R direction) outer side of the carcass 16, over substantially the entire region in the tire axial direction of the crown portion 23.

In the present embodiment, the belt 26 is structured by a reinforcing portion 28 and a resin portion 32. The reinforcing portion 28 is formed by a woven fabric in which reinforcing cords 30 that are formed of carbon fibers are woven-in in a state of crossing one another, and this reinforcing portion 28 is covered by the resin portion 32. Here, for the reinforcing cords 30, it is preferable to use cords that are thicker than and whose tensile strength is higher than the cords of the carcass ply 14. The reinforcing cords 30 can be structured by monofilaments (solid wires) of metal fibers or organic fibers or the like, or by multifilaments (stranded wires) in which these fibers are twisted together.

On the other hand, a resin material, whose tensile elasticity rate is higher than those of the rubber material that structures the side rubber layers 24 and the rubber material that structures the tread 36, is used at the resin portion 32 that covers the reinforcing cords 30. A thermoplastic resin or a thermoplastic elastomer (TPE) that are elastic, or a thermosetting resin or the like can be used as the resin portion 32 that covers the reinforcing cords 30. In consideration of the elasticity at the time of traveling and the moldability at the time of manufacturing, it is desirable to use a thermoplastic elastomer.

Thermoplastic polyolefin elastomers (TPO), thermoplastic polystyrene elastomers (TPS), thermoplastic polyamide elastomers (TPA), thermoplastic polyurethane elastomers (TPU), thermoplastic polyester elastomers (TPC), dynamic crosslinking thermoplastic elastomers (TPV), and the like are examples of the thermoplastic elastomer.

Further, polyurethane resins, polyolefin resins, vinyl chloride resins, polyamide resins and the like are examples of the thermoplastic resins. Moreover, a resin that, for example, has a deflection temperature under load (at the time of a load of 0.45 MPa) as prescribed by ISO 75-2 or ASTM D648 of 78°C or more, and has a tensile yield strength as prescribed by JIS K7113 of 10 MPa or more, and has a tensile elongation at break as similarly prescribed by JIS K7113 of 50% or more, and has a Vicat softening temperature (A method) as prescribed by JIS K7206 of 130°C or more can be used as the thermoplastic resin material.

The tensile elasticity rate (stipulated by JIS K7113:1995) of the resin portion 32 that covers the reinforcing cords 30 is preferably 100 MPa or more. Further, the upper limit of the tensile elasticity rate of the resin portion 32 that covers the reinforcing cords 30 is preferably made to be 1000 MPa or less. Note that within a range of 200 to 700 MPa is particularly preferable for the tensile elasticity rate of the resin portion 32 that covers the reinforcing cords 30.

Further, the thickness dimension of the belt 26 of the present embodiment is preferably made to be greater than the diameter dimension of the reinforcing cords 30. In other words, it is preferable that the reinforcing cords 30 be completely embedded in the resin portion 32. In a case in which the pneumatic tire 10 is used for a passenger vehicle, the thickness dimension of the belt 26, concretely, is preferably 0.70 mm or more.

Further, the tread 36 is disposed at the tire radial direction outer side of this belt 26, and a conventional, general, known rubber material is used as the rubber material that is used at the tread 36. Further, grooves 36A for drainage are formed in the tread 36. For the pattern of the tread 36 as well, a conventional, general, known pattern is used.

### (Method of Manufacturing Tire)

An example of a method of manufacturing the tire 10 of the present embodiment is described next.

First, the unvulcanized tire case 25, which is formed from the inner liner 22 that is formed of a rubber material, the bead cores 12, the bead fillers 18 that are formed of a rubber material, the carcass ply 14 in which the cords are covered by a rubber material, and the side rubber layers 24, which are illustrated in Fig. 1, is formed at the outer peripheral surface of a known tire molding drum (not illustrated). The method of manufacturing up until here is the same as a conventional method.

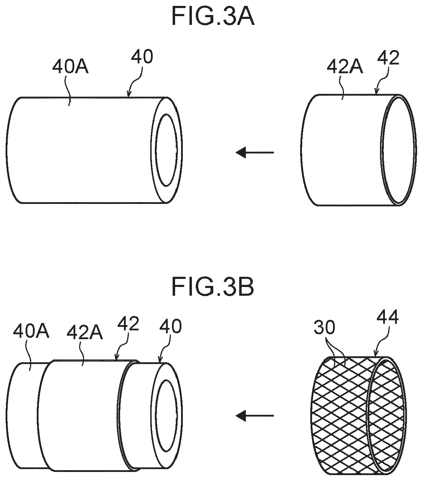

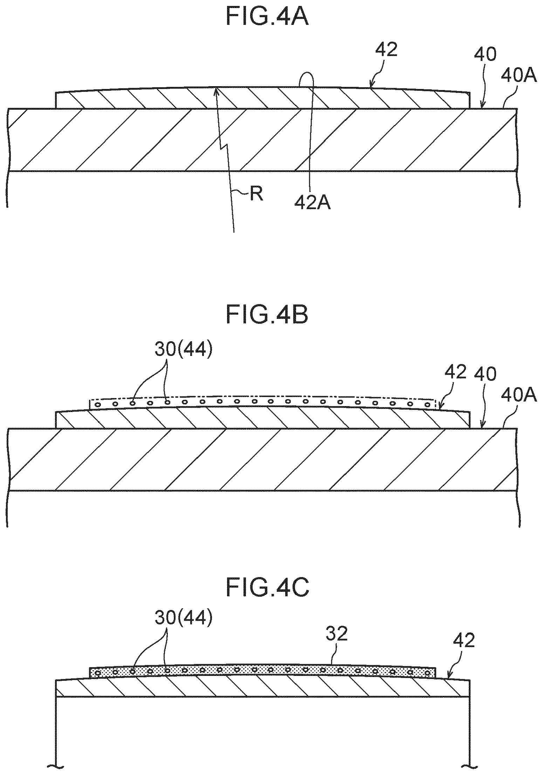

Hereinafter, an example of the process of manufacturing the belt 26 relating to the present embodiment is described by using Fig. 3A through Fig. 3D and Fig. 4A through Fig. 4C.

First, an auxiliary plate 42, which is annular and is shown at the right side in Fig. 3A, is fit onto an outer peripheral surface 40A of a belt molding drum 40 that is formed in a cylindrical tube shape as shown at the left side of Fig. 3A (auxiliary plate attaching step). Note that the state in which the auxiliary plate 42 is fit on the outer peripheral surface 40A of the belt molding drum 40 is shown in the left side of Fig. 3B. This auxiliary plate 42 is formed by a heat-resistant member, and, in the present embodiment, is formed of a metal.

Further, the cross-sectional shapes when cut along the tire axial direction (the arrow W direction) (the tire axial direction cross-sectional shapes) at the belt molding drum 40 on whose outer peripheral surface 40A the auxiliary plate 42 is fit, are shown in Fig. 4A through Fig. 4C. As shown in Fig. 4A, an outer peripheral surface 42A of the auxiliary plate 42 is formed such that the tire axial direction cross-sectional shape thereof is arc-shaped (radius of curvature R), and is formed so as to match the shape of the crown portion 23 provided at the carcass 16 as shown in Fig. 2.

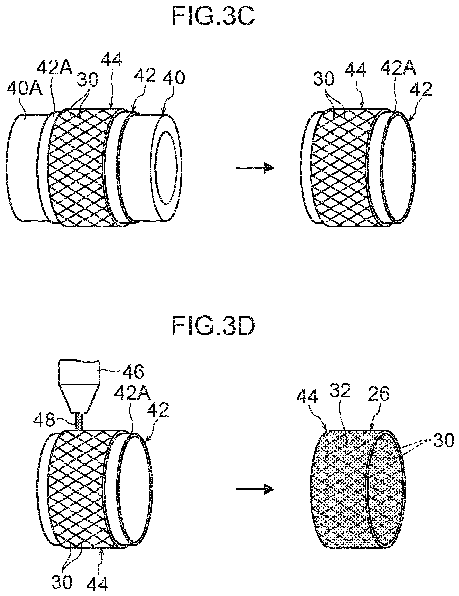

Next, a reinforcing sheet (reinforcing portion) 44, which is annular and is a woven fabric that is formed by the reinforcing cords 30 being woven-in, is, as shown at the right side of Fig. 3B, wound onto the outer peripheral surface 42A of the auxiliary plate 42 that is fit on the outer peripheral surface 40A of the belt molding drum 40 as shown at the left side of Fig. 3B (reinforcing sheet attaching step). Note that the state in which the reinforcing sheet 44 is wound on the outer peripheral surface 42A of the auxiliary plate 42 is shown at the left side of Fig. 3C, and the tire axial direction cross-sectional shape thereof is shown in Fig. 4B.

Here, the reinforcing cords 30 that structure the reinforcing sheet 44 are formed of carbon fibers. Further, this reinforcing sheet 44 does not necessarily have to be annular. Although not illustrated, the both end portions of the reinforcing sheet 44 that is in an elongated form may be temporarily tacked in the state in which the reinforcing sheet 44 is wound on the outer peripheral surface 42A of the auxiliary plate 42, and this reinforcing sheet 44 may be attached to the outer peripheral surface 42A of the auxiliary plate 42.

Further, the auxiliary plate 42, at which the reinforcing sheet 44 is wound on the outer peripheral surface 42A of the auxiliary plate 42 as shown at the left side in Fig. 3C, is removed from the outer peripheral surface 40A of the belt molding drum 40 (auxiliary plate removing step). Note that the state in which the auxiliary plate 42, on which the reinforcing sheet 44 is wound, has been removed from the outer peripheral surface 40A of the belt molding drum 40 is shown in the right side of Fig. 3C.

Next, as shown at the left side of Fig. 3D, by using a 3D printer 46, molten resin 48 is discharged out onto the reinforcing sheet 44 that is wound on the outer peripheral surface 42A of the auxiliary plate 42, and the surface of the reinforcing sheet 44 (including the gaps between the woven-in reinforcing cords 30) is covered by the molten resin 48 (resin covering step).

Then, when the molten resin 48 that covers the surface of the reinforcing sheet 44 hardens, the reinforcing sheet 44 is in a state of being covered by the resin portion 32 (see Fig. 4C). In this state, as shown at the right side of Fig. 3D, the auxiliary plate 42 is removed, and the belt 26 is formed (belt removing step).

Then, although not illustrated, this belt 26 is placed on the radial direction outer side of a tire case of a tire molding drum, and the tire case is expanded, and the outer peripheral surface of the tire case, or in other words, the outer peripheral surface of the carcass 16, is pressure-bonded to the inner peripheral surface of the belt 26. Finally, in the same way as with a general tire, the unvulcanized tread 36 is affixed to the outer peripheral surface of the belt 26, and the green tire is completed. The green tire that is manufactured in this way is, in the same way as with a general tire, vulcanization-molded in a vulcanization molding mold, and the tire 10 is completed.

### <Operation, Effects of Tire>

Operation and effects of the tire 10 relating to the present embodiment are described next.

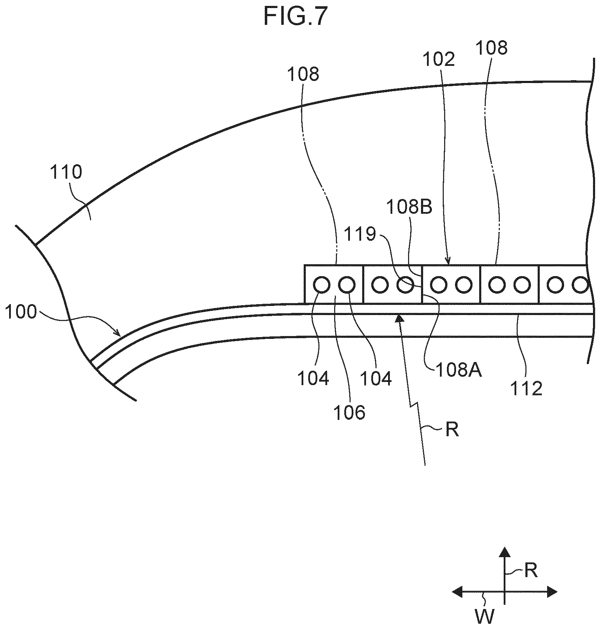

A structure that is exemplified as a comparative example is, as shown in Fig. 7, a structure in which a resin spiral belt 102, which is formed from a spiral structure of resin covered cords 108 that are formed by reinforcing cords 104 being covered by resin portions 106, and in which the resin portions 106 that are adjacent in the tire axial direction (the arrow W direction) are made integral by welding or the like, is disposed on the outer peripheral surface (the tire radial direction outer side) of a carcass 100. In this structure, due to repeated deformation of shoulder portions 110 at the time of contacting the road surface, there is the possibility that stress will concentrate at resin welded portions 119 where adjacent surfaces 108A, 108B that are adjacent in the tire axial direction are welded together, and structures that mitigate the concentration of stress must be considered.

In particular, at a crown portion 112 that is provided at the carcass 100, in a case in which the shape of the cross-section when cut along the tire axial direction (the arrow W direction) (the tire axial direction cross-section) is arc-shaped (radius of curvature R), although not illustrated, there is the possibility that steps or gaps will form between the resin covered cords 108 that are adjacent to one another, more so at the both end portions in the tire axial direction of the carcass 100 than at the central portion side, due to the difference in diameters. In a case in which steps or gaps form between these resin covered cords 108 in this way, there is the concern that the welded surface areas between the resin portions 106 will not be ensured sufficiently.

Therefore, in the present embodiment, as shown in Fig. 2, the belt 26 is structured to include the reinforcing portion 28 and the resin portion 32. The reinforcing portion 28 of the belt 26 is formed by the reinforcing cords 30 crossing, and these reinforcing cords 30 are covered by the resin portion 32.

Due thereto, the reinforcing cords 30 that cross and the resin portion 32 are made integral, and, between the reinforcing cords 30 that cross one another, the welded portions 119 of the resins that are shown in Fig. 7 as the comparative example can themselves be eliminated. As a result, at the belt 26 that is structured to include the reinforcing cords 30 (the reinforcing portion 28) and the resin portion 32 and that is shown in Fig. 2, the rigidity of the belt 26 itself can be improved, and the durability of the tire 10 that has this belt 26 can be improved.

Further, by improving the rigidity of the belt 26 itself, the in-plane shearing rigidity in the tire width direction of the belt 26 can be ensured. Further, due to the in-plane shearing rigidity in the tire width direction of the belt 26 being ensured, lateral force in a case in which a slip angle is applied to the tire 10 can be sufficiently generated. Accordingly, in a vehicle having the tires 10, the handling stability can be ensured, and further, the responsiveness also can be improved.

Moreover, due to the rigidity of the belt 26 itself improving, the out-of-plane bending rigidity of the belt 26 improves, and breakage of the belt 26 due to so-called buckling of the tread 36 (the phenomenon in which a portion of the tread 36 separates from the road surface) that is due to riding-over protrusions or the like can be suppressed. Accordingly, in accordance with the present embodiment, the durability of the tire 10 that has this belt 26 can be improved.

Note that the crown portion 23 that is provided at the carcass 16 is not necessarily limited to a case in which the shape of the tire axial direction cross-section thereof is arc-shaped, and may be rectilinear. Even if the tire axial direction cross-sectional shape of the crown portion 23 is rectilinear, effects that are substantially similar to those of the case in which it is arc-shaped can be obtained.

Further, in the present embodiment, at least some of the reinforcing cords 30 are formed by carbon fibers. Although not illustrated, in a case in which, for example, the belt 26 that is provided at the tire radial direction outer side of the carcass 16 is formed only of carbon fibers, the cost increases. Therefore, in the present embodiment, only the frame at the belt 26 is the reinforcing portion 28, and carbon fibers are used thereat. Due thereto, the rigidity of the belt 26 can be ensured while the cost is reduced.

Moreover, in the present embodiment, a woven fabric that is formed by carbon fibers being woven-in is used as the reinforcing portion 28. Due thereto, the rigidity of the belt 26 can be further improved. However, it is not absolutely necessary that the carbon fibers be a woven fabric.

Further, in the present embodiment, the reinforcing portion 28 is provided at the tire radial direction outer side of the carcass 16. Here, in a case in which the reinforcing cords 30 that structure this reinforcing portion 28 are formed of metal or carbon or the like, it is difficult to directly join the reinforcing portion 28 to the tire radial direction outer side of the carcass 16.

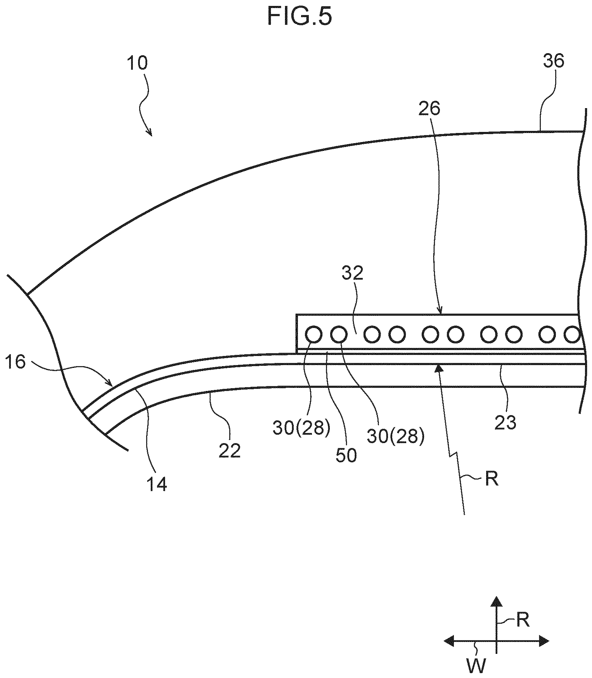

On the other hand, in the above-described embodiment, the reinforcing portion 28 is covered by the resin portion 32, but, for the "covering" in the present embodiment, it suffices for at least a portion of the reinforcing portion 28 to be covered by the resin portion 32. The surface of the reinforcing sheet 44 is in a state of being covered by the resin portion 32 due to the manufacturing method in which, as shown in Fig. 3D, after the reinforcing sheet 44 is attached to the outer peripheral surface 42A of the auxiliary plate 42, the molten resin 48 is made to flow on the surface of the reinforcing sheet 44 (including the gaps between the woven-in reinforcing cords 30), and the surface of the reinforcing sheet 44 is covered by the molten resin 48. In this case, cases can also be imagined in which, at the resin portion 32, there is little resin at the carcass 16 side of the reinforcing cords 30. Therefore, in the present embodiment, for example, as shown in Fig. 5, a resin layer 50 may be separately provided between the carcass 16 and the reinforcing portion 28, and the reinforcing portion 28 may be joined to the tire radial direction outer side of the carcass 16 via this resin layer 50 and the resin portion 32.

Due thereto, even if there is a case in which, in the manufacturing, the resin portion 32 cannot be provided at the carcass 16 side of the reinforcing cords 30, by providing the separate resin layer 50 at the carcass 16 side of the reinforcing cords 30, this resin layer 50 and the reinforcing cords 30 are joined via the resin portion 32, and the reinforcing portion 28 is joined to the tire radial direction outer side of the carcass 16, and the effect of increasing the joining strength is exhibited. Namely, in accordance with the present embodiment, the degrees of freedom in selecting the method of manufacturing of and the materials of the belt 26 can be further improved. Note that the resin layer 50 is a layer that is provided between the carcass 16 and the reinforcing portion 28, and does not necessarily have to be provided separately as a "resin layer". Therefore, "resin layer" may indicate a portion of the resin portion.

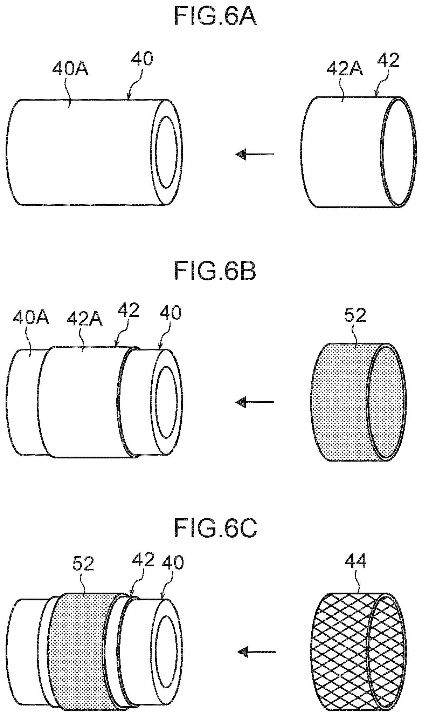

In the above-described structure, for example, in the above-described process of manufacturing the belt 26, after the auxiliary plate attaching step shown in Fig. 3A and Fig. 6A, i.e., before the reinforcing sheet attaching step shown at the right side of Fig. 3B and the right side of Fig. 6C, a resin sheet (resin layer) 52 that is shown at the right side of Fig. 6B is wound onto the outer peripheral surface 42A of the auxiliary plate 42 that is shown in the left side of Fig. 3B and the left side of Fig. 6B (resin sheet attaching step). Note that the state in which the reinforcing sheet 44 is wound on the outer peripheral surface 42A of the auxiliary plate 42 is shown at the left side of Fig. 6C. In the same way as the reinforcing sheet 44, this resin sheet 52 does not necessarily have to be annular.

### (Modified Example of Present Embodiment)

Further, in the present embodiment, in the state in which the reinforcing sheet 44 is wound on the outer peripheral surface 42A of the auxiliary plate 42 as shown in Fig. 3C, the molten resin 48 is discharged out onto the reinforcing sheet 44 as shown in Fig. 3D, and the surface of the reinforcing sheet 44 is covered by the molten resin 48, and the belt 26 that includes the reinforcing portion 28 and the resin portion 32 is formed. However, the method of manufacturing the belt 26 is not limited to this.

For example, although not illustrated, the belt 26 may be formed by covering the surface of the reinforcing sheet 44 by the resin portion 32 by insert molding or two-color molding. Note that, in accordance with two-color molding, the surface of the reinforcing sheet 44 that is shown in Fig. 2 can be covered by the resin portion 32 at substantially the same thickness at the carcass 16 side and the side opposite thereto of the reinforcing cords 30.

Further, in the present embodiment, as the resin material that structures the resin layer 50 that is shown in Fig. 5, the same resin material as the resin portion 32 of the belt 26 can be used. However, it suffices to be able to weld the resin layer 50 to the resin portion 32 of the belt 26, and, depending on the case, a material that is a resin material of the same type as the resin portion 32 but has a different hardness may be used, or a resin material of a type that is different than the resin portion 32 may be used.

The belt 26 of the above-described embodiment is not limited to a general tire, and can also be used in a radial tire whose side portions are reinforced by reinforcing rubber. Further, the resin layer 50 and the belt 26 of the above-described embodiment are joined together, and this may be joining by welding, or may be joining by using an adhesive.

Although an embodiment of the present invention has been described above, the present invention is not limited to the above, and, other than the above, can of course be implemented by being modified in various ways within a scope that does not depart from the gist thereof.

The disclosure of Japanese Patent Application No. 2018-120307 filed on June 25, 2018 is, in its entirety, incorporated by reference into the present specification.

All publications, patent applications, and technical standards mentioned in the present specification are incorporated by reference into the present specification to the same extent as if such individual publication, patent application, or technical standard was specifically and individually indicated to be incorporated by reference.

## Claims

1. A tire comprising:
a tire frame member that is annular; and
a belt that is provided at a tire radial direction outer side of the tire frame member,
wherein the belt is structured to include:
a reinforcing portion that is formed by reinforcing cords crossing, and
a resin portion that covers the reinforcing portion.

2. The tire of Claim 1, wherein at least some of the reinforcing cords are formed of carbon fibers.

3. The tire of Claim 2, wherein the reinforcing portion is a woven fabric that is formed by reinforcing cords, which include the carbon fibers, being woven-in.

4. The tire of any one of Claim 1 through Claim 3, wherein a resin layer is provided between the tire frame member and the reinforcing portion.

5. A method of manufacturing a tire for manufacturing the tire of any one of Claim 1 through Claim 4, the method comprising:
a reinforcing sheet attaching step of attaching a reinforcing sheet that forms the reinforcing portion at an outer peripheral surface of an auxiliary plate that is annular and that is formed so as to match a shape of the belt; and
a resin covering step of causing a molten resin, which forms the resin portion, to flow on a surface of the reinforcing sheet that is attached to the outer peripheral surface of the auxiliary plate, and covering the surface of the reinforcing sheet with the molten resin.

6. The method of manufacturing a tire of Claim 5, wherein a resin sheet attaching step of attaching a resin sheet, which forms the resin layer of Claim 4, to the outer peripheral surface of the auxiliary plate is provided before the reinforcing sheet attaching step.
